# FASCICULE DE BREVET EUROPEEN

(11) **EP 3 365 547 B1**
(45) Date de publication et mention de la délivrance du brevet: **02.10.2019**
(21) Numéro de dépôt: 16794704.3
(22) Date de dépôt: 13.10.2016
(51) Int. Cl.: F02M 35/12

(54) **DISPOSITIF D'ATTÉNUATION ACOUSTIQUE POUR UNE LIGNE D'ADMISSION**
SCHALLDÄMPFENDE VORRICHTUNG FÜR EINE ANSAUGLEITUNG
ACOUSTIC ATTENUATION DEVICE FOR AN INTAKE LINE

(30) Priorité: 19.10.2015 FR 1559939
(43) Date de publication de la demande: 29.08.2018
(73) Titulaire: NOVARES France, 92140 Clamart (FR)
(72) Inventeur: JEAN, Thomas, 62150 Houdain (FR); LORENSKI, Aurelien, 62770 Fillievres (FR); GUILLEMANT, François, 62000 Arras (FR); PLESSY, Arnaud, 62700 Bruay La Buissiere (FR)
(74) Mandataire: Delorme, Nicolas
(86) Numéro de dépôt international: PCT/FR2016/052647
(87) Numéro de publication internationale: WO 2017/068264

(56) Documents cités:
- EP-A1- 1 255 071
- EP-A2- 1 291 570
- EP-A2- 1 903 208
- DE-A1-102004 014 314
- DE-A1-102008 033 802
- FR-A1- 2 551 501
- US-A- 4 350 223

## Description

La présente invention concerne un dispositif d'atténuation acoustique pour une ligne d'admission d'un moteur à combustion thermique équipée d'un ou plusieurs turbocompresseurs.

Les moteurs à combustion interne présentent une composante acoustique basse fréquence allant de 30Hz à 1kHz. Cette composante est générée par l'ouverture et la fermeture des soupapes, ainsi que par la résonance des différentes cavités du moteur (chambres de combustion, conduits, ...).

En outre, dans le cas des moteurs suralimentés par turbocompresseur, il existe une composante acoustique haute fréquence allant de 800 Hz à 15kHz. Cette composante acoustique est générée par le turbocompresseur et peut se propager et rayonner à travers les conduits d'admission d'air.

Les solutions classiques, pour atténuer les bruits propagés par le turbocompresseur le long des conduits d'admission d'air, comprennent notamment l'utilisation de résonateurs, de silencieux, de dispositifs quarts d'onde et de chambres d'expansion.

L'une de ces solutions est, par exemple, décrite dans le document EP 1 255 071 qui présente un atténuateur multi-cavités. Ces différents artifices acoustiques atténuent chacun les bruits sur une bande spectrale donnée. Il est donc nécessaire de combiner plusieurs artifices acoustiques pour atténuer l'ensemble des bruits émis. Ainsi, ces artifices acoustiques peuvent nécessiter un volume important alors que l'espace disponible dans un emplacement moteur d'un véhicule est très restreint. De plus, le cumul de plusieurs artifices acoustiques augmente les pertes de charges dans le circuit d'admission d'air, ce qui est néfaste aux performances du véhicule et peut être préjudiciable à la consommation en carburant.

Inversement, l'utilisation d'un conduit dénué d'artifices acoustiques ne crée pas de pertes de charges, mais ne permet aucune atténuation des bruits propagés par le turbocompresseur.

En conséquence l'invention a pour but de proposer un dispositif d'atténuation des bruits peu encombrant, qui permette d'atténuer les bruits propagés dans les conduits d'admission d'air tout en minimisant les pertes de charges.

Selon une définition générale, l'invention concerne un dispositif acoustique pour une ligne d'admission d'un moteur à combustion thermique équipée d'un turbocompresseur. Le dispositif d'atténuation des bruits comprend un conduit d'acheminement de gaz présentant une paroi périphérique défini par un diamètre intérieur. Le conduit comprend au moins une chambre annulaire définie par un diamètre supérieur au diamètre du conduit. La, ou chaque, chambre annulaire est obturée par une paroi comprenant un matériau poreux qui est positionnée dans le prolongement de la paroi périphérique du conduit, selon un diamètre sensiblement égal au diamètre du conduit, pour permettre une circulation d'air entre le conduit et la, ou chaque, chambre périphérique, en réduisant les pertes de charges dues au changement de section entre le conduit et la, ou chaque, chambre annulaire.

Ainsi, l'invention propose un dispositif d'atténuation acoustique peu encombrant, qui permet d'atténuer les bruits propagés dans les conduits d'admission d'air tout en minimisant les pertes de charges. L'utilisation d'un matériau poreux obturant la, ou chaque, chambre annulaire permet d'atténuer les bruits propagés dans le conduit sans générer d'importantes pertes de charges. En d'autres termes le dispositif d'atténuation selon l'invention permet un compromis optimal entre atténuation acoustique et pertes de charges dans une ligne d'admission.

Selon l'invention, le dispositif d'atténuation présente un compartiment qui comprend une paroi extérieure dans le prolongement de la, ou chaque, chambre annulaire, et une paroi intérieure formée par une portion de la paroi périphérique du conduit, la portion de la paroi périphérique du conduit présentant une pluralité d'orifices de sorte que le compartiment et ladite portion présentant une pluralité d'orifices forment un silencieux à absorption.

Selon l'invention le dispositif d'atténuation comprend deux chambres annulaires positionnées de part et d'autre du silencieux à absorption.

Une telle disposition peut permettre d'obtenir une atténuation sonore maximale pour un minimum de pertes de charges.

Le matériau poreux peut être un matériau qui appartient au groupe comprenant les textiles polymères et les fibres métalliques.

Le matériau poreux peut présenter une perméabilité comprise entre 500 L/m²/s et 1600 L/m²/s.

L'invention concerne aussi un ensemble d'admission d'air d'un véhicule qui comprend un conduit d'admission d'air, un turbocompresseur présentant une entrée d'air et une sortie d'air et un dispositif d'atténuation.

L'ensemble selon l'invention permet d'atténuer les émissions sonores du turbocompresseur tout en réduisant les pertes de charges dans le conduit d'admission d'air.

Selon un mode de réalisation, le dispositif d'atténuation peut être positionné en amont du turbocompresseur.

Selon le même mode de réalisation précédent, le matériau poreux du dispositif d'atténuation peut comprendre un textile polymère.

Selon un autre mode de réalisation, le dispositif d'atténuation peut être positionné en aval du turbocompresseur.

Selon le même mode de réalisation précédent, le matériau poreux du dispositif d'atténuation peut comprendre des fibres métalliques, compte tenu des températures rencontrées dans cette configuration.

D'autres caractéristiques et avantages de l'invention se dégageront de la description qui va suivre, en regard des dessins annexés représentant à titre d'exemple non limitatif une forme de réalisation d'un dispositif d'atténuation selon celle-ci.
- La figure 1 est une vue en perspective, en coupe partielle, d'un dispositif d'atténuation selon l'invention.
- La figure 2 est une vue en coupe, de face, d'un dispositif d'atténuation selon l'invention.
- La figure 3 est une vue en coupe, de face d'un dispositif d'atténuation comprenant un silencieux à absorption entouré par deux chambres annulaires dépourvues de matériau poreux.
- La figure 4 est un graphique comparatif des pertes de charges par rapport au flux d'air circulant dans le dispositif selon l'invention et dans des dispositifs connus.
- La figure 5 est un graphique comparatif des émissions sonores par rapport au flux d'air circulant dans le dispositif selon l'invention et dans des dispositifs connus.

L'invention concerne un dispositif d'atténuation 1 pour une ligne d'admission d'un moteur à combustion thermique équipée d'un turbocompresseur qui n'est pas représenté sur les figures.

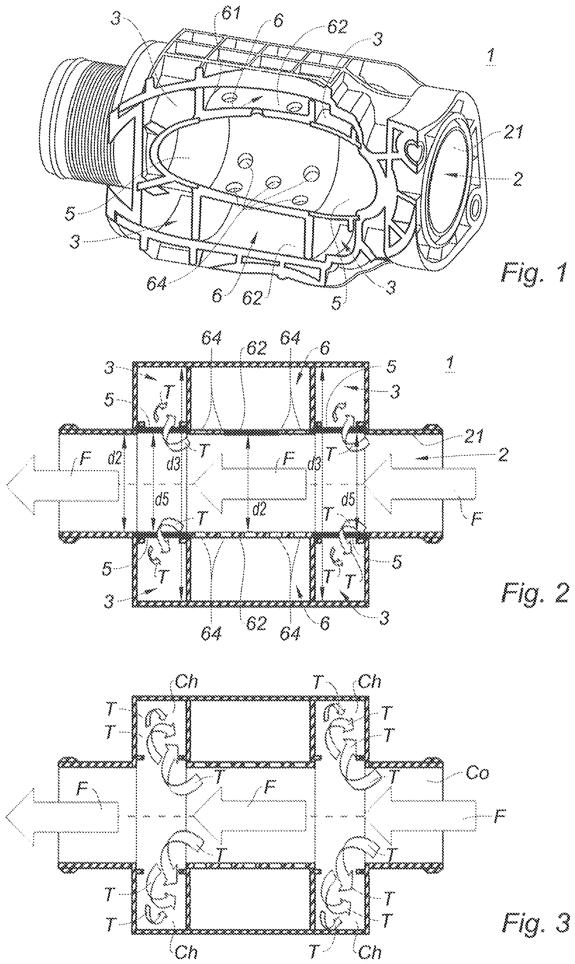

Le dispositif d'atténuation 1 est représenté sur les figures 1 et 2.

Le dispositif d'atténuation 1 peut, par exemple, être réalisé en matériau polymère ou en métal.

Le dispositif d'atténuation 1 comprend un conduit 2 d'acheminement de gaz d'admission d'un moteur thermique.

Selon le mode de réalisation ici présenté, le conduit 2 présente une géométrie sensiblement cylindrique

Le conduit 2 présente une paroi intérieure 21 d'un diamètre d2.

Comme on peut l'observer notamment sur la figure 2, selon le mode de réalisation ici présenté, le conduit 2 présente deux chambres annulaires 3.

Chaque chambre annulaire 3 est définie par un diamètre d3 extérieur par rapport au diamètre d2 du conduit 2.

Chaque chambre annulaire 3 est obturée par une paroi 5 comprenant un matériau poreux positionnée dans le prolongement de la paroi périphérique 21 du conduit 2, selon un diamètre d5 sensiblement égal au diamètre d2 du conduit 2.

Selon le mode de réalisation ici présenté, la paroi 5 présente la géométrie d'une bande qui vient fermer la chambre annulaire sur son diamètre intérieur.

Selon le positionnement du dispositif d'atténuation en amont ou en aval du turbocompresseur et donc selon la température de l'air circulant dans le dispositif, le matériau poreux peut comprendre un textile en fibres polymères ou en fibres métalliques.

Le matériau poreaux peut présenter une perméabilité, par exemple, comprise entre 500L/m²/s et 1600L/m²/s.

Le positionnement de la paroi 5 est une disposition technique particulièrement avantageuse de l'invention permettant de piéger et dissiper une partie du signal acoustique sans pour autant générer de pertes de charges. Ce résultat est du notamment à l'absence de changement de diamètre entre le conduit 2 et chaque chambre annulaire 3. La paroi 5 de matériau poreux assure un écoulement sensiblement dépourvu de perte de charge mais qui cependant participe une atténuation acoustique.

De plus, le dispositif d'atténuation 1 présente un compartiment 6 positionné entre les deux chambres annulaires 3.

Le compartiment 6 comprend une paroi extérieure 61 positionnée dans le prolongement des chambres annulaires 3, et une paroi intérieure 62.

La paroi intérieure 62 du compartiment 6 est formée par une portion de la paroi périphérique 21 du conduit 2. Comme on peut l'observer, la paroi intérieure 62 du compartiment 6 présente une pluralité d'orifices 64. Cette disposition technique permet au compartiment 6 de former un silencieux à absorption.

Le fonctionnement du silencieux à absorption est le suivant : lorsqu'il est stimulé par des ondes sonores, le faible volume d'air contenu dans chaque orifice 64 agit sensiblement comme une petite masse qui serait suspendue à un ressort constitué par le volume d'air plus important contenu dans le compartiment 6. On obtient ainsi une atténuation du bruit dans une bande spectrale située au voisinage de la fréquence caractéristique de ce système « masse ressort ».

L'invention porte aussi sur un ensemble d'admission d'air d'un véhicule, qui comprend un conduit d'admission d'air, un turbocompresseur présentant une entrée d'air et une sortie d'air et un dispositif d'atténuation 1 selon l'invention.

Selon un premier mode de réalisation, le dispositif d'atténuation 1 peut être positionné en amont du turbocompresseur.

Selon ce premier mode de réalisation, le matériau poreux du dispositif d'atténuation 1 comprend un textile polymère.

Selon un deuxième mode de réalisation, le dispositif d'atténuation 1 est positionné en aval du turbocompresseur.

Selon ce deuxième mode de réalisation, le matériau poreux du dispositif d'atténuation 1 comprend des fibres métalliques.

Les figures 2 et 3 permettent de comparer, schématiquement le comportement d'un flux d'air F circulant dans le dispositif d'atténuation selon l'invention et dans un dispositif d'atténuation présentant un silencieux et deux chambres annulaires dépourvues de matériau poreux.

Tel que représenté sur la figure 3, le changement de section entre le conduit Co et chaque chambre Ch provoque d'importantes turbulences T lorsque le flux d'air F pénètre dans chaque chambre Ch. Ces turbulences sont la source de pertes de charges dans le flux d'air F.

En revanche, comme on peut l'observer sur la figure 2, la paroi 5 comprenant un matériau poreux permet d'atténuer les turbulences T lorsque le flux d'air F traverse la paroi 5, minimisant ainsi les pertes de charges dans le flux d'air F.

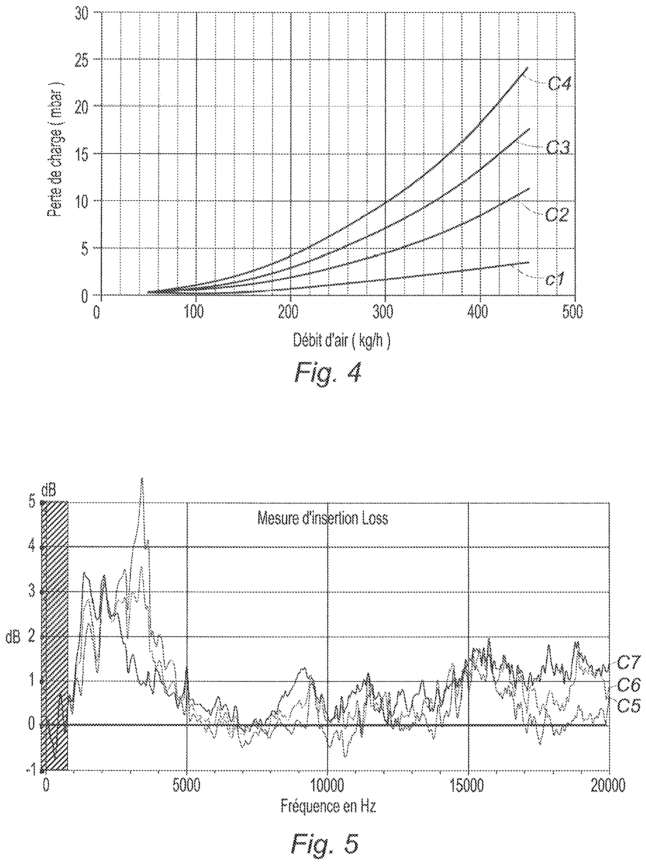

Les figures 3 et 4 permettent d'apprécier les performances du dispositif d'atténuation acoustique 1.

La figure 4 est un graphique présentant la perte de charge en fonction du débit d'air circulant dans différents dispositifs.

La courbe C1 correspond à une circulation d'air dans un tube simple.

La courbe C2 correspond à une circulation d'air dans un dispositif d'atténuation 1 selon l'invention.

La courbe C3 correspond à une circulation d'air dans un dispositif d'atténuation présentant deux chambres annulaires entourant un silencieux à absorption, une seule des deux chambres est obturée par un matériau poreux.

La courbe C4 correspond à une circulation d'air dans un dispositif présentant deux chambres annulaires, dépourvues de matériau poreux, entourant un silencieux à absorption.

Comme on peut l'observer sur la figure 4, pour un débit d'air de 400 kg/h, les pertes de charges dans le dispositif d'atténuation 1 sont environ 50% plus faible que dans un dispositif présentant deux chambres annulaires, dépourvues de poreux, entourant un silencieux à absorption.

Ainsi, le dispositif d'atténuation 1 permet de minimiser les pertes de charges par rapport aux dispositifs objets de la comparaison.

La figure 5 est un graphique présentant le niveau d'émission sonore en fonction de la fréquence circulant dans différents dispositifs.

La courbe C5 correspond à une circulation d'air dans un dispositif d'atténuation présentant deux chambres annulaires entourant un silencieux à absorption, une seule des deux chambres est obturée par un matériau poreux.

La courbe C6 correspond à une circulation d'air dans un dispositif présentant deux chambres annulaires, dépourvues de matériau poreux, entourant un silencieux à absorption.

La courbe C7 correspond à une circulation d'air dans un dispositif d'atténuation 1 selon l'invention.

Comme on peut l'observer sur la figure 5, le dispositif d'atténuation 1 permet d'avoir des performances d'absorption des bruits proches des performances des dispositifs de l'art antérieur.

Ainsi, le dispositif d'atténuation 1 permet d'optimiser le compromis entre pertes de charges et atténuation des bruits.

L'invention propose donc un dispositif d'atténuation des bruits peu encombrant, qui permet d'atténuer les bruits propagés dans les conduits d'admission d'air tout en minimisant les pertes de charges.

Bien entendu, l'invention ne se limite pas à la seule forme d'exécution du dispositif décrite ci-dessus à titre d'exemple, elle embrasse au contraire toutes les variantes de réalisation.

## Revendications

1. Dispositif d'atténuation (1) acoustique pour une ligne d'admission d'un moteur à combustion thermique équipée d'un turbocompresseur, le dispositif d'atténuation comprenant un conduit (2) d'acheminement de gaz présentant une paroi périphérique (21) et un diamètre (d2), le conduit (2) comprenant au moins une chambre annulaire (3) radiale définie par un diamètre (d3) supérieur au diamètre (d2) du conduit (2), la ou chaque, chambre annulaire (3) étant obturée par une paroi (5) comprenant un matériau poreux, positionnée dans le prolongement de la paroi périphérique (21) du conduit (2), selon un diamètre (d5) sensiblement égal au diamètre du conduit (2), pour permettre une circulation d'air entre le conduit (2) et, la ou chaque, chambre périphérique (3), **caractérisé en ce que** le dispositif d'atténuation (1) présente un compartiment (6) qui comprend une paroi extérieure (61) et une paroi intérieure (62) formée par une portion de la paroi périphérique (21) du conduit (2), la portion de la paroi périphérique (21) du conduit (2) présentant une pluralité d'orifices (64) de sorte que le compartiment (6) et ladite portion présentant une pluralité d'orifices (64) forment un silencieux à absorption et **en ce que** le dispositif d'atténuation (1) comprend deux chambres annulaires (3) positionnées de part et d'autre du silencieux à absorption.

2. Dispositif d'atténuation acoustique (1) selon la revendication 1, **caractérisé en ce que** le matériau poreux est un matériau comprenant des textiles polymères.

3. Dispositif d'atténuation acoustique (1) selon la revendication 1, **caractérisé en ce que** le matériau poreux est un matériau comprenant des fibres métalliques.

4. Dispositif d'atténuation acoustique (1) selon l'une des revendications 1 à 3, **caractérisé en ce que** le matériau poreux présente une perméabilité comprise entre 500 L/m²/s et 1600 L/m²/s.

5. Ensemble (10) d'admission d'air d'un véhicule **caractérisé en ce qu'**il comprend un conduit (2) d'admission d'air, un turbocompresseur présentant une entrée d'air et une sortie d'air et un dispositif d'atténuation (1) selon l'une des revendications 1 à 4.

6. Ensemble (10) d'admission selon la revendication 5, **caractérisé en ce que** le dispositif d'atténuation (1) est positionné en amont du turbocompresseur.

7. Ensemble (10) d'admission selon la revendication 6, **caractérisé en ce que** le matériau poreux du dispositif d'atténuation (1) comprend un textile polymère.

8. Ensemble (10) d'admission selon la revendication 5, **caractérisé en ce que** le dispositif d'atténuation (1) est positionné en aval du turbocompresseur.

9. Ensemble (10) d'admission selon la revendication 8, **caractérisé en ce que** le matériau poreux du dispositif d'atténuation (1) comprend des fibres métalliques.

## Patentansprüche

1. Schalldämpfende Vorrichtung (1) für eine Ansaugleitung eines thermischen Verbrennungsmotors, der mit einem Turbokompressor ausgestattet ist, wobei die dämpfende Vorrichtung eine Rohrleitung (2) zum Zuführen von Gas umfasst, die eine umlaufende Wand (21) und einen Durchmesser (d2) aufweist, wobei die Rohrleitung (2) mindestens eine radiale ringförmige Kammer (3) umfasst, die durch einen Durchmesser (d3) definiert wird, der größer ist, als der Durchmesser (d2) der Rohrleitung (2), wobei die oder jede ringförmige Kammer (3) durch eine Wand (5) abgedeckt wird, die ein poröses Material umfasst, die in der Verlängerung der umlaufenden Wand (21) der Rohrleitung (2) entsprechend einem Durchmesser (d5) positioniert ist, der im Wesentlichen gleich dem Durchmesser der Rohrleitung (2) ist, um ein Zirkulieren von Luft zwischen der Rohrleitung (2) und der oder jeder umlaufenden Kammer (3) zu erlauben, **dadurch gekennzeichnet, dass** die dämpfende Vorrichtung (1) ein Fach (6) aufweist, das eine Außenwand (61) und eine Innenwand (62) umfasst, die durch einen Abschnitt der umlaufenden Wand (21) der Rohrleitung (2) gebildet wird, wobei der Abschnitt der umlaufenden Wand (21) der Rohrleitung (2) eine Vielzahl von Öffnungen (64) in der Art aufweist, dass das Fach (6) und der Abschnitt, der eine Vielzahl von Öffnungen (64) aufweist, einen Absorptions-Schalldämpfer bilden, und dadurch, dass die dämpfende Vorrichtung (1) zwei ringförmige Kammern (3) umfasst, die beiderseits des Absorptions-Schalldämpfers positioniert sind.

2. Schalldämpfende Vorrichtung (1) nach Anspruch 1, **dadurch gekennzeichnet, dass** das poröse Material ein Material ist, das Polymertextilien umfasst.

3. Schalldämpfende Vorrichtung (1) nach Anspruch 1, **dadurch gekennzeichnet, dass** das poröse Material ein Material ist, das Metallfasern umfasst.

4. Schalldämpfende Vorrichtung (1) nach einem der Ansprüche 1 bis 3, **dadurch gekennzeichnet, dass** das poröse Material eine Durchlässigkeit aufweist, die zwischen 500 L/m²/s und 1600 L/m²/s enthalten ist.

5. Anordnung (10) zum Ansaugen von Luft eines Fahrzeugs, **dadurch gekennzeichnet, dass** sie eine Rohrleitung (2) zum Ansaugen von Luft, einen Turbokompressor, der einen Lufteingang und einen Luftausgang aufweist, und eine dämpfende Vorrichtung (1) nach einem der Ansprüche 1 bis 4 umfasst.

6. Anordnung (10) zum Ansaugen nach Anspruch 5, **dadurch gekennzeichnet, dass** die dämpfende Vorrichtung (1) stromaufwärts des Turbokompressors positioniert ist.

7. Anordnung (10) zum Ansaugen nach Anspruch 6, **dadurch gekennzeichnet, dass** das poröse Material der schalldämpfenden Vorrichtung (1) ein Polymertextil umfasst.

8. Anordnung (10) zum Ansaugen nach Anspruch 5, **dadurch gekennzeichnet, dass** die dämpfende Vorrichtung (1) stromabwärts des Turbokompressors positioniert ist.

9. Anordnung (10) zum Ansaugen nach Anspruch 8, **dadurch gekennzeichnet, dass** das poröse Material der dämpfenden Vorrichtung (1) Metallfasern umfasst.

## Claims

1. An acoustic attenuation device (1) for an intake line of a heat combustion engine equipped with a turbocompressor, the attenuation device comprising a pipe (2) for conveying gas having a peripheral wall (21) and a diameter (d2), the pipe (2) comprising at least one radial annular chamber (3) defined by a diameter (d3) larger than the diameter (d2) of the pipe (2), the or each annular chamber (3) being sealed by a wall (5) comprising a porous material, positioned in the extension of the peripheral wall (21) of the pipe (2), according to a diameter (d5) substantially equal to the diameter of the pipe (2), to enable an air circulation between the pipe (2) and the, or each, peripheral chamber (3), **characterized in that** the attenuation device (1) has a compartment (6) which comprises an external wall (61) and an internal wall (62) formed by a portion of the peripheral wall (21) of the pipe (2), the portion of the peripheral wall (21) of the pipe (2) having a plurality of orifices (64) such that the compartment (6) and said portion having a plurality of orifices (64) form an absorption muffler and **in that** the attenuation device (1) comprises two annular chambers (3) positioned on either side of the absorption muffler.

2. The acoustic attenuation device (1) according to claim 1, **characterized in that** the porous material is a material comprising polymer textiles.

3. The acoustic attenuation device (1) according to claim 1, **characterized in that** the porous material is a material comprising metal fibers.

4. The acoustic attenuation device (1) according to any of claims 1 to 3, **characterized in that** the porous material has a permeability comprised between 500 L/m²/s and 1600 L/m²/s.

5. An air intake set (10) of a vehicle **characterized in that** it comprises an air intake pipe (2), a turbocompressor having an air inlet and an air outlet and an attenuation device (1) according to any of claims 1 to 4.

6. The intake set (10) according to claim 5, **characterized in that** the attenuation device (1) is positioned upstream of the turbocompressor.

7. The intake set (10) according to claim 6, **characterized in that** the porous material of the attenuation device (1) comprises a polymer textile.

8. The intake set (10) according to claim 5, **characterized in that** the attenuation device (1) is positioned downstream of the turbocompressor.

9. The intake set (10) according to claim 8, **characterized in that** the porous material of the attenuation device (1) comprises metal fibers.
